# EUROPEAN PATENT SPECIFICATION

(11) **EP 1 835 382 B1**
(45) Date of publication and mention of the grant of the patent: **24.09.2014**
(21) Application number: 07104272.5
(22) Date of filing: 15.03.2007
(51) Int. Cl.: G06F 1/16, G06F 3/0354, G06F 3/046, G06F 3/047

(54) **Position detecting apparatus, position inputting apparatus and computer**
Einrichtung zur Positionserfassung, Einrichtung und Rechner zur Positionseingabe
Dispositif de détection de position, dispositif et ordinateur pour entrée de position

(30) Priority: 16.03.2006 JP 2006073101
(43) Date of publication of application: 19.09.2007
(73) Proprietor: Wacom Co., Ltd., Saitama 349-1148 (JP)
(72) Inventor: Ito, Masamitsu, Saitama-ken Saitama 349-0218 (JP)
(74) Representative: Richardt Patentanwälte PartG mbB

(56) References cited:
- EP-A1- 0 571 226
- WO-A1-2007/013499
- JP-A- H11 110 115
- JP-A- 2000 066 614
- JP-A- 2003 005 661
- US-A- 5 923 388
- US-A1- 2002 041 272
- US-A1- 2004 095 333

## Description

### Field of the Invention:

The present invention relates to a position detecting apparatus, a position inputting apparatus and a computer suitable for use in directly inputting position information from a display apparatus, for example. More specifically, this invention relates to a position a display apparatus, for example. More specifically, this invention relates to a position detecting apparatus, a position inputting apparatus and a computer capable of preventing trouble from being produced on display even when a display apparatus and a position detecting apparatus are combined.

### Description of the Related Art:

When a position detecting apparatus provided along with a display apparatus, for example, is the of electromagnetic induction system, in the arrangement according to the related art, the position detecting apparatus is located at the back side of the display apparatus (see Cited Patent Reference 1, for example).

Also, in a position detecting apparatus which is of the electrostatic coupling system, in order to decrease moiré generated when a detection conductor is provided on the display side of the display apparatus, it has been customary that detection electrodes are formed as broken-line like detection electrodes (see Cited Patent Reference 2, for example).

More specifically, in the position detecting apparatus disposed along with the display apparatus according to the related art, it has been customary for the electromagnetic induction system position detecting apparatus to locate the position detecting apparatus at the back side of the display apparatus. If the position detecting apparatus is of the electrostatic coupling system in which the detection conductor has to be located on the display side of the display apparatus, then it has been customary that the detection electrodes are formed as the broken-line like detection electrodes.

US 2004/095333 A1 describes a digitizer for user interaction via an object with an electronically refreshable display screen, the digitizer comprising: a transparent sensing arrangement of detectors located at said electronically refreshable display screen for detecting an electric field of said object, said detectors having outputs, and an arrangement of differential amplifiers associated with said outputs, thereby to apply differential detection between said outputs.

[Cited Patent Reference 1]: Japanese Published Patent Application No. 2002-215317 [Cited Patent Reference 2]: Japanese Published Patent Application No. 11-110115

### SUMMARY OF THE INVENTION

Apparatus for detecting designated position on a board called a "tablet/digitizer" and inputting position information are widespread as input apparatus suitable for use with systems for detecting the position designated on the board, it is considered that a position detecting apparatus of electromagnetic induction system is extremely effective because the electromagnetic induction system position detecting apparatus is high in detection accuracy and reliability.

On the other hand, thin display apparatus such as liquid-crystal displays have been developed and apparatus in which a display apparatus and a tablet/digitizer are integrally formed as one body have been developed while the screen of the display apparatus is assumed to be the board surface. In that case, in the above-mentioned electromagnetic induction system position detecting apparatus, since it is permitted that a indicating device and the board surface can be spaced apart, it has been customary that the position detecting apparatus is provided at the back side of the display apparatus.

However, when the position detecting apparatus is provided at the back side of the display apparatus, restrictions such as to further dispose a driving circuit of the display apparatus at the back side of the position detecting apparatus are imposed upon designing of the display apparatus. When the position detecting apparatus is generally attached to the display apparatus later on, a large number of conditions are imposed upon the specification of the display apparatus.

On the other hand, it is considered that a detecting portion of the position detecting apparatus is formed on a transparent substrate, the detecting portion formed on this transparent substrate being provided on the display side of the display apparatus. According to this arrangement, conditions imposed upon the specification of the display apparatus can be removed substantially. However, in the position detecting apparatus of the electromagnetic induction system, since the detecting portion needs a large number of detecting conductor wirings, if such detecting apparatus is located on the display side of the display apparatus, then it is unavoidable that artifacts will be produced on display due to moiré occurring between the arrangement of the display elements of the display apparatus and the detecting conductors of the detecting portion.

In view of the aforesaid aspects, the present invention intends to provide a position detecting apparatus, a position inputting apparatus and a computer in which a display apparatus for displaying images by changing the states of a plurality of display elements arrayed in the predetermined direction and a position detecting apparatus for detecting the position indicated on the display apparatus can be combined satisfactorily and in which in particular, even when a plurality of loop coils is located close to the display apparatus, it is possible to prevent artifacts from being produced on display.

The invention provides a position detecting apparatus, a position inputting apparatus and an electronic apparatus; embodiments of the invention are as claimed in the independent claims, the dependent claims describe preferred embodiments.

In order to solve the above-mentioned problems and in order to attain the objects of the present invention, a first embodiment of the present invention is a position detecting apparatus which includes a display apparatus for displaying images by changing the states of a plurality of display elements arrayed in the predetermined direction and a detecting conductor disposed on the display apparatus to thereby detect the position indicated on the display apparatus, wherein the detecting conductor is a loop coil composed of short sides and long sides, the long sides of the loop coil being provided so as to cross the predetermined direction of the display elements.

In the position detecting apparatus of a second embodiment of the present invention, the short sides of the detecting conductor are located outside the screen of the display apparatus.

In the position detecting apparatus of a third embodiment of the present invention, the display apparatus has a plurality of loop coils being disposed along its display side.

In the position detecting apparatus of a fourth embodiment of the present invention, a plurality of loop coils has wirings, which form the long sides of the detecting conductor, disposed at an equal interval on the screen of the display apparatus.

In the position detecting apparatus of a fifth embodiment of the present invention, a plurality of loop coils is disposed on the screen of the display apparatus in an overlapping fashion.

In the position detecting apparatus of a sixth embodiment of the present invention, a plurality of loop coils is formed of a coil, each of which is formed of a plurality of turns, the multiple wirings forming the long side of the detecting conductor being disposed on the screen of the display apparatus at an equal interval.

In the position detecting apparatus of a seventh embodiment of the present invention, the position indicated on the display apparatus is detected by calculating the levels of signals received by an indicating device after a plurality of loop coils was selected to transmit transmission signals.

In the position detecting apparatus of a eighth embodiment of the present invention, the position indicated on the display apparatus is detected by calculating the levels of received signals after a plurality of loop coils received transmission signals transmitted from the indicating device.

In the position detecting apparatus of a ninth embodiment of the present invention, the position indicated on the display apparatus is detected by calculating the levels of received signals after a plurality of loop coils was selected to transmit transmission signals and signals received at the indicating device and transmitted from the indicating device were received by the same or different loop coils.

In the position detecting apparatus of a tenth embodiment of the present invention, a plurality of loop coils is composed of a first loop coil group and a second loop coil group in which long sides of the detecting conductor are crossing each other, long sides of the first and second loop coil groups crossing the predetermined direction of the display elements.

According to another embodiment of the invention, the angle to the predetermined direction, in which at least one coil portion is crossing the display apparatus, is greater than two degrees.

Also, in order to attain the objects of the present invention, an eleventh embodiment of the present invention is a position inputting apparatus which includes a display apparatus for displaying images by changing the states of a plurality of display elements arrayed in the predetermined direction and a detecting conductor disposed on the display apparatus to thereby detect the position indicated on the display apparatus and to input position information, wherein the detecting conductor is a loop coil composed of short sides and long sides, the long sides of the loop coil being provided so as to cross the predetermined direction of the display elements.

Further, in order to attain the objects of the present invention, the twelfth embodiment of the present invention is a computer which includes a display apparatus for displaying images by changing the states of a plurality of display elements arrayed in the predetermined direction and a position detecting apparatus disposed on the display apparatus to detect the position indicated on the display apparatus, wherein a detecting conductor disposed on the display apparatus is a loop coil composed of short sides and long sides, the long sides of the loop coil being provided so as to cross the predetermined direction of the display elements.

According to the position detecting apparatus, the position inputting apparatus and the computer of embodiments of the present invention, the display apparatus for displaying images by changing the states of a plurality of display elements arrayed in the predetermined direction and the position detecting apparatus for detecting the position indicated on the display apparatus can be combined satisfactorily. Also, in particular, even when a plurality of loop coils is located close to the display apparatus, it is possible to prevent artifacts from being produced on display.

### BRIEF DESCRIPTION OF THE DRAWINGS

FIG. 1 is a block diagram showing an arrangement of a position detecting apparatus according to an embodiment of the present invention;
FIGS. 2A and 2B are schematic diagrams showing specific arrangements of each loop coil of a position detecting grid 1 which is used to explain the position detecting apparatus according to the embodiment of the present invention, respectively;
FIGS. 3A and 3B are schematic diagrams showing specific arrangements of each loop coil of a position detecting grid 1 which is used to explain the position detecting apparatus according to the embodiment of the present invention, respectively;
FIG. 4 is a perspective view showing an arrangement of a position inputting apparatus according to an embodiment of the present invention;
FIG. 5 is a diagram showing an external appearance of a computer according to an embodiment of the present invention; and
FIG. 6 is a functional block diagram of the computer according to the embodiment of the present invention.

### DESCRIPTION OF THE PREFERRED EMBODIMENTS

The present invention will now be described below with reference to the drawings.

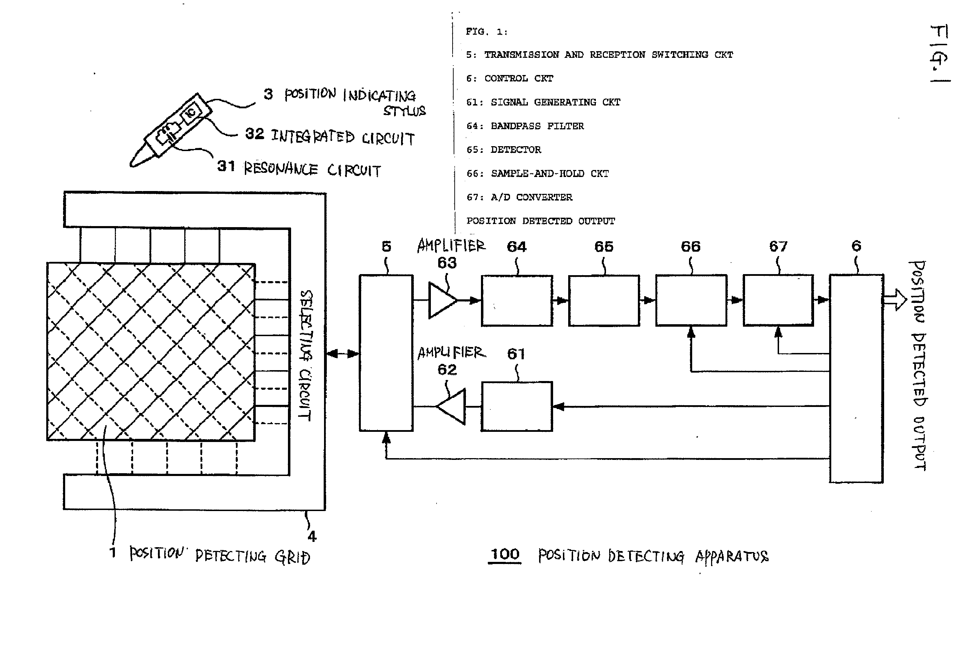

FIG. 1 of the accompanying drawings is a block diagram showing an arrangement of a position detecting apparatus according to an embodiment of the present invention.

A position detecting apparatus, generally depicted by reference numeral 100 in FIG. 1, includes a position detecting grid 1 which is schematically shown on the left-hand end of FIG. 1. Although a display apparatus is not shown in FIG. 1, it is to be appreciated that display elements of the display apparatus (not shown) should be arrayed in the horizontal and vertical directions. The position detecting grid 1 shown in FIG. 1 is provided in such a manner that long sides of loop coils (shown only by lines in FIG. 1) to effect electromagnetic induction are set to oblique direction which cross any of the horizontal and vertical directions as shown in FIG. 1. Also, solid lines and broken lines in the position detecting grid 1 shown in FIG. 1 represent loop coils of different layers and these loop coils also are provided so as to cross each other.

Then, when such position detecting grid 1 is in use, a position indicating stylus 3 having a resonance circuit 31, for example, incorporated therein is moved close to the position detecting grid 1, whereby the resonance circuit 31 housed within the position indicating stylus 3 is driven by an alternating field signal with a specific frequency transmitted from the position detecting grid 1, for example, and a resonance signal outputted from the resonance circuit 31 is received again at the position detecting grid 1. It should be noted that proper code information can be inserted into this resonance signal by an integrated circuit (IC) 32 connected to the resonance circuit 31. However, this integrated circuit (IC) 32 is not always necessary.

Accordingly, the position detecting grid 1 includes means for transmitting the above-mentioned alternating field signal and receiving the above-mentioned resonance signal. More specifically, in the position detecting grid 1, the end portion of one loop coil provided in the slanting direction is connected to a selecting circuit 4. The selecting circuit 4 carries out selection to sequentially scan each one of the loop coils and it can also select the respective layers shown by the solid lines and the broken lines in FIG. 1. A transmission and reception switching circuit 5 is connected to the selecting circuit 4 and this transmission and reception switching circuit 5 is adapted to switch transmission of the above-mentioned alternating field signal and reception of the above-mentioned resonance signal.

The transmission and reception switching circuit 5 switches transmission of the alternating field signal and reception of the resonance signal in accordance with a control signal supplied from a control circuit 6. Also, a transmission signal with a specific frequency from a signal generating circuit 61, which is operated under control of the control circuit 6, is supplied through an amplifier 62 to the transmission and reception switching circuit 5 and it is further supplied through the transmission and reception switching circuit 5 to the selecting circuit 4. Then, the transmission signal is transmitted to one loop coil of the position detecting grid 1 selected by sequential scanning at the selecting circuit 4 and the alternating field signal is transmitted from one selected loop coil.

Further, the resonance circuit 31 incorporated within the position indicating stylus 3 is driven by this alternating field signal and the resonance signal is received by the position detecting grid 1. The received signal is outputted through the selecting circuit 4 and the transmission and reception switching circuit 5. The thus received signal is supplied through an amplifier 63 to a bandpass filter (BPF) 64 which passes the signal with the above-mentioned specific frequency. The signal that has passed the bandpass filter 64 is supplied to a detector 65. A signal detected by the detector 65 is supplied through a sample-and-hold (S/H) circuit 66 to an analog-to-digital (A/D) converter 67, in which it is converted in the form of analog to digital signal and the thus converted digital signal is inputted to the control circuit 6.

In this manner, the signal received at the position detecting grid 1 which is made close to the position indicating stylus 3 is digitally converted by the A/D converter 67 and inputted to the control circuit 6. It should be noted that reception at the position detecting grid 1 also is carried out at every loop coil selected by sequential scanning at the selecting circuit 4. Accordingly, in this case, the signal obtained when the resonance signal from the position indicating stylus 3 is received is outputted from each loop coil of the sequentially selected position detecting grids 1 and also the above-mentioned signals may be outputted from the loop coil to which the position indicating stylus 3 is opposed and the adjacent loop coil.

Accordingly, the control circuit 6 in which the signal received at the position detecting grid 1 was digitally converted and inputted may select the signal of the highest reception level from the signals received at a plurality of loop coils of the position detecting grid 1 and the control circuit 6 determines that the position indicating stylus 3 opposes the center of the loop coil which received the above signal. Alternatively, the control circuit 6 carries out various processing such as to simulate changes of levels of signals received at a plurality of loop coils, to calculate the position at which the level of the received signal is maximized and to determine that the above calculated position should be the opposing position of the position indicating stylus 3. In this manner, a position detected output can be outputted from the control circuit 6.

According to the above-mentioned embodiment, in the position detecting apparatus of the electromagnetic induction system, the position indicated on the display apparatus can be detected in such a manner that a plurality of loop coils are selected to transmit signals, the signal received at the indicating device and transmitted from the indicating device is received by the same loop coil or by different loop coil and that the level of the received signal may be calculated. Embodiments of the present invention can be applied to position detection in other systems.

More specifically, according to a further embodiment of the present invention, the position indicated on the display apparatus can be detected in such a manner that a plurality of loop coils, for example, is selected to transmit signals and that the level of the signal received at the indicating device may be calculated. In this case, a cable (not shown) is led out from the position indicating stylus 3 in FIG. 1, for example, and a signal from the cable is supplied to the amplifier 63. As a result, it is possible to detect the indicated position by calculating the level of the signal received by the indicating device (position indicating stylus 3).

Alternatively, according to a further embodiment of the present invention, the position indicated on the display apparatus may be detected in such a manner that the signal transmitted from the indicating device may be received at a plurality of loop coils, for example, and that the levels of the received signals may be calculated. In this case, in order to transmit a signal from the position indicating stylus 3, a power supply such as a battery may be provided within the position indicating stylus 3 shown in FIG. 1, for example. Alternatively, the cable (not shown) led out from the amplifier 62 may be connected to the position indicating stylus 3 and thereby the transmission signal may be supplied to the position indicating stylus 3. As a consequence, the signal transmitted from the indicating device (position indicating stylus 3) may be received at the position detecting grid 1 and the indicated position can be detected by calculating the level of the received signal.

Further, in embodiments of the present invention, when the opposing position of the position indicating stylus 3 is detected by the loop coils of the two layers which are crossing each other as shown by the solid lines and the broken lines in FIG. 1, coordinates by which two-dimensional position can be specified may be obtained. In this case, however, since the respective loop coils of the position detecting grid 1 are provided in the slanting direction relative to the direction in which a plurality of display elements constructing the display apparatus is arrayed, conversion processing for converting these display elements into X - Y coordinates of the vertical axis and the horizontal axis is carried out by the control circuit 6. It should be noted that this conversion can be carried out by a numerical table.

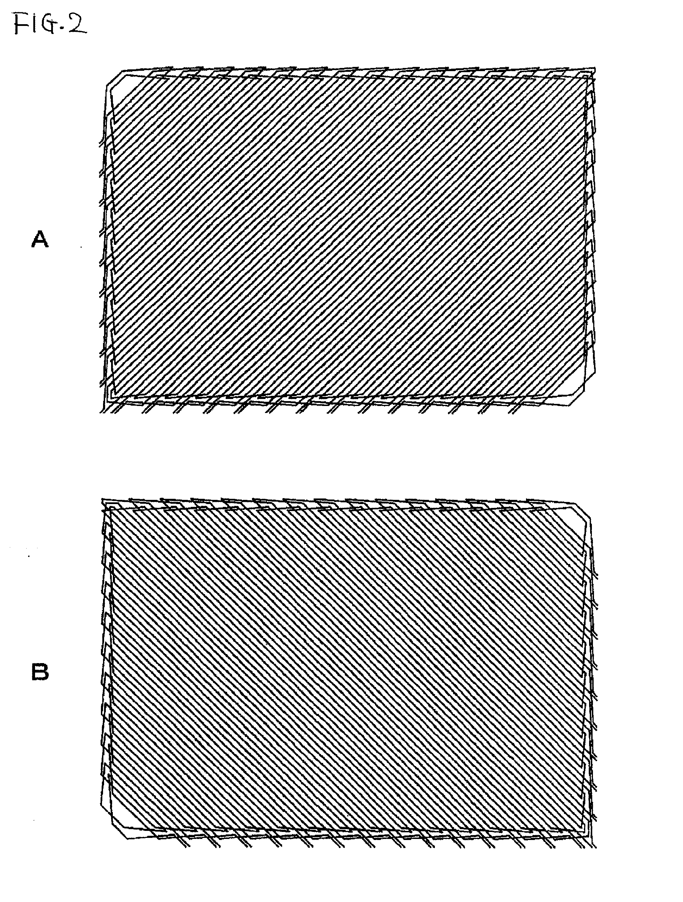

Also, in the present invention, since the respective loop coils of the position detecting grid 1 are provided in the oblique direction relative to the direction in which a plurality of display elements constructing the display apparatus is arrayed, the size of each loop coil is reduced in the four corners of the display screen and the area is not uniform. More specifically, FIGS. 2A and 2B show these loop coils more concretely. It should be noted that FIGS. 2A and 2B show coils of respective layers of coils provided over two layers. The position detecting grid 1 may be formed by laminating these coils of respective layers.

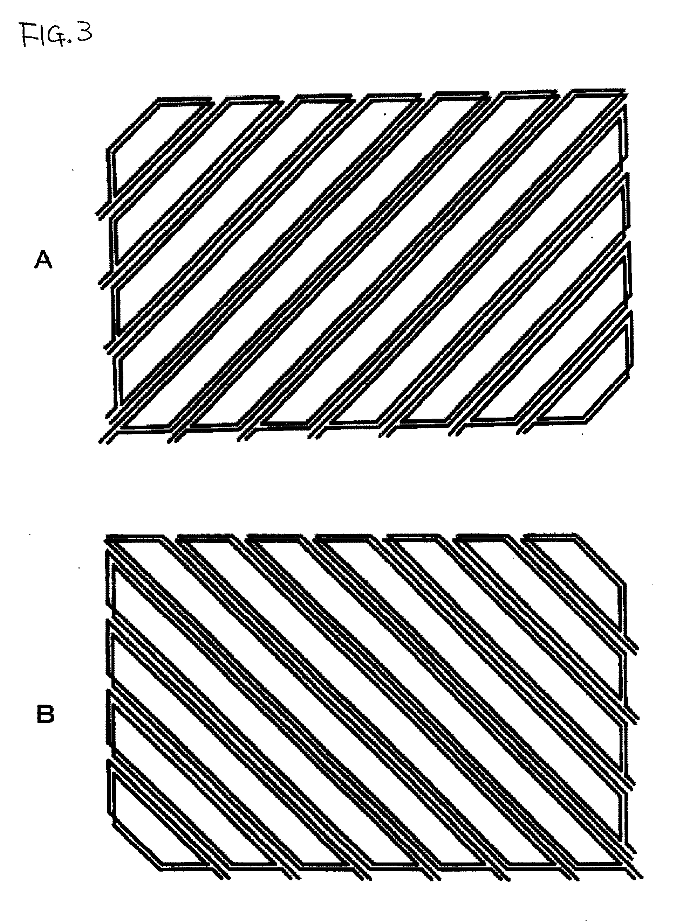

However, the number of the loop coils shown in FIGS. 2A and 2B is not all of the number of the loop coils, and the actual number of the loop coils may be determined in response to the number of pixels of the display apparatus in such a manner that the detection conductor constructing each loop coil may be inserted into a gap between the adjacent pixels. Accordingly, the long sides of these detection conductors may be provided in parallel to each other with an equal interval. Also, while a plurality of loop coils is disposed in an overlapping fashion in accordance with an actual practice as shown in FIGS. 2A and 2B, if these overlapping portions are deleted, then the arrangement of each loop coil becomes as shown in FIGS. 3A and 3B.

Accordingly, as is clear from FIGS. 3A and 3B, each loop coil has an opening of nearly a trapezoid or parallelogram shape and the size of this opening is reduced in the four corners of the display screen. In this case, it may be considered that detection sensitivity based on electromagnetic induction is changed as the size of the loop coil is changed. However, it may be considered that the change of sensitivity is in proportion to the area of the loop coil. Thus, if the shape of each loop coil is fixed like the position detecting grid 1, then it is possible to specify in advance the ratio of the change of sensitivity. Accordingly, the change of such detection sensitivity can be easily corrected by arbitrary means.

As described above, according to the embodiment of the position detecting apparatus 100, shown in FIG. 1, to which the position detecting apparatus, the position inputting apparatus and the computer according to an embodiment of the present invention is applied, even when the long sides of the loop coils serving as the detection conductors are provided so as to cross the predetermined direction in which the display elements of the display apparatus are arrayed, it is possible to easily detect the opposing position of the position indicating stylus 3. Consequently, it is possible to dispose the electromagnetic induction system position detecting apparatus, which is extremely high in detection accuracy and reliability, along the display apparatus.

Also, when the detecting portion (position detecting grid) of the above-mentioned position detecting apparatus is formed on a transparent substrate, for example, and the detecting portion formed on this transparent substrate is located on the display side of the display apparatus, since the long sides of the loop coils serving as the detection conductors are provided so as to cross the predetermined direction in which the display elements of the display apparatus are arrayed, artifacts such as moiré can be prevented from being caused, and it becomes possible to provided the detecting portion on the display side of the display apparatus. Accordingly, even when the position detecting apparatus is located along the display apparatus, the display apparatus can be prevented from being restricted from a design standpoint and it is possible to attach the detecting portion of the position detecting apparatus to the assembled display apparatus later on.

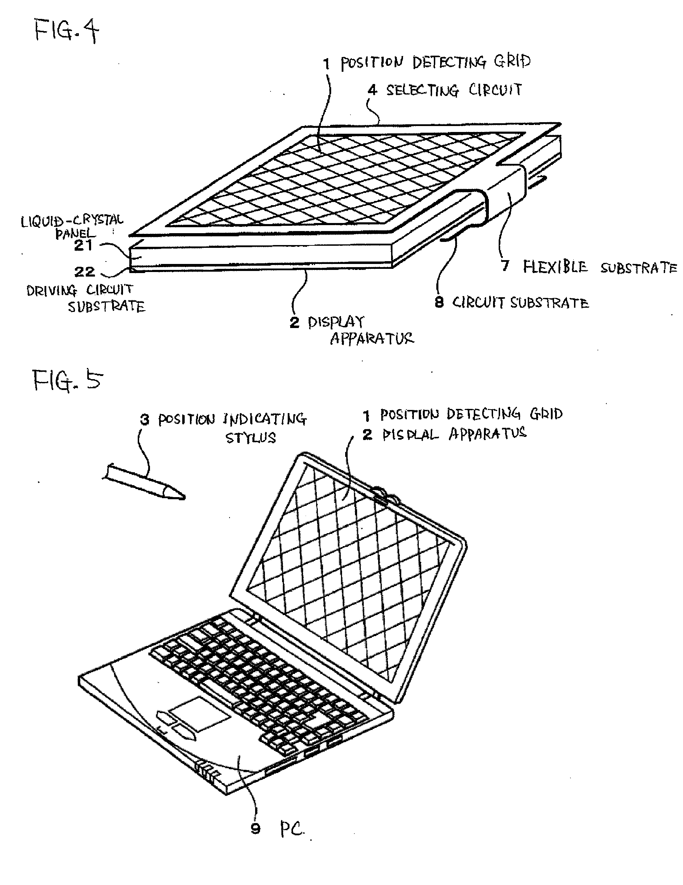

Further, FIG. 4 is a diagram showing an arrangement of a position inputting apparatus according to an embodiment of the present invention. More specifically, FIG. 4 is a perspective view showing the position inputting apparatus according to an embodiment of the present invention in an exploded fashion. Also, in this embodiment, as shown in FIG. 4, there is provided a display apparatus 2 and the position detecting grid 1 is provided on the display side of the display apparatus 2.

Specifically, as shown in FIG. 4, the display apparatus 2 includes a liquid-crystal panel 21 and a driving circuit substrate 22 which are integrally formed as one body. On the other hand, the position detecting grid 1 is provided on the side of the liquid-crystal panel 21 of the display apparatus 2. Further, a flexible substrate 7 is extended from the selecting circuit 4 provided along with the position detecting grid 1, and a circuit substrate 8 on which respective circuits of the transmission and reception switching circuit 5 to the control circuit 6 disposed on the side of the driving circuit substrate 22 of the display apparatus 2 are provided is connected to the display apparatus 2 through this flexible substrate 7.

Therefore, according to the position inputting apparatus to which embodiments of the present invention are applied, the detecting portion (position detecting grid) of the position detecting apparatus can be attached to the assembled display apparatus later on. In addition, since a display apparatus which is specially designed and the like need not be used, it is possible to easily design and manufacture the position inputting apparatus. Also, the display apparatus and the position detecting apparatus can be assembled satisfactorily. Also, in particular, when a plurality of loop coils is located near the display apparatus, it is possible to prevent artifacts from being produced in the display.

Also, FIG. 5 is a diagram showing an external appearance of a computer according to an embodiment of the present invention. More specifically, FIG. 5 shows an external appearance of the embodiment of a so-called lap-top type computer. As shown in FIG. 5, the position detecting grid 1 is provided on the display side of the display apparatus 2 which is formed on a computer body 9, for example, so as to open and close freely. Then, when a user moves the position indicating stylus 3 to this display apparatus 2 and the position detecting grid 1, the user becomes able to indicate the position on the screen of the display apparatus 2 and to enter information into the computer.

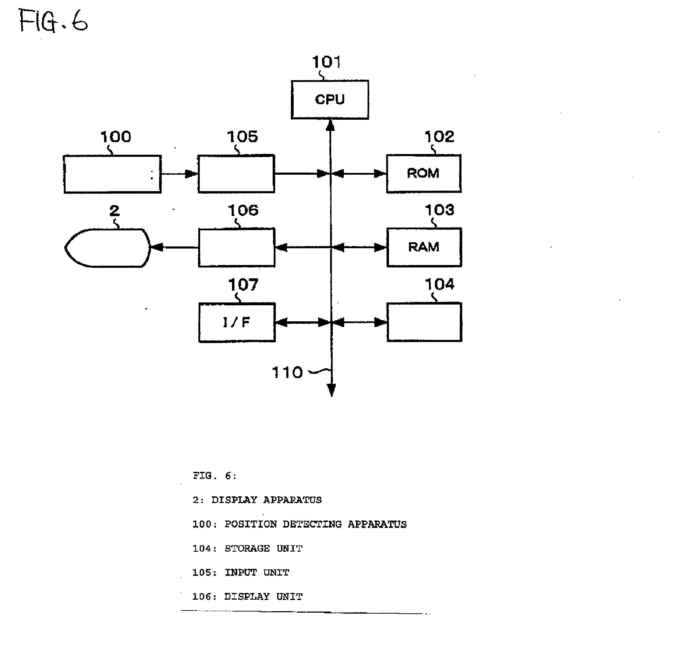

Accordingly, FIG. 6 is a functional block diagram showing a computer according to an embodiment of the present invention. As shown in FIG. 6, an internal bus 110 is prepared for a central processing unit (CPU) 101, and a read-only memory (ROM) 102, a random-access memory (RAM) 103 and a storage unit 104 are connected through this internal bus 110 to the central processing unit (CPU) 101, thereby resulting in the computer body 9 being formed. Further, the above-mentioned position detecting apparatus 100 is connected through the input unit 105 to the internal bus 110 and the internal bus 110 is connected through the display unit 106 to the display apparatus 2. Also, an interface (I/F) 107 is connected to the internal bus 110.

Therefore, according to the above-mentioned computer to which an embodiment of the present invention is applied, when the position indicating stylus 3 is moved close to the screen of the display apparatus 2, coordinates information detected by the position detecting apparatus 100 is supplied through the input unit 105 to the internal bus 110 and it is processed by the central processing unit (CPU) 101 in accordance with programs and the like stored in the storage unit 104. Then, processed results can be displayed on the display apparatus 2 from the internal bus 110 through the display unit 106. Then, also in this case, the display apparatus 2 and the position detecting apparatus 100 can be combined satisfactorily and it is possible to prevent trouble from being produced on the display.

As described above, according to the position detecting apparatus according to embodiments of the present invention, the position detecting apparatus includes the display apparatus capable of display images by changing the states of a plurality of display elements arrayed in the predetermined direction and the detecting conductors disposed on the display apparatus and it is able to detect the position indicated on the display apparatus. Since the detecting conductor is the loop coil composed of short sides and long sides and the detecting conductor is characterized in that the long sides of the loop coil are provided so as to cross the predetermined direction of the display elements, the above-mentioned display apparatus and the above-mentioned position detecting apparatus can be combined satisfactorily. In particular, when a plurality of loop coils is located close to the display apparatus, it is possible to prevent artifacts from being produced on display.

Also, according to the position inputting apparatus of embodiments of the present invention, the position inputting apparatus includes the display apparatus capable of display images by changing the states of a plurality of display elements arrayed in the predetermined direction and the detecting conductors disposed on the display apparatus and it is able to detect the position indicated on the display apparatus and to input position information. Since the detecting conductor is the loop coil composed of short sides and long sides and the detecting conductor is characterized in that the long sides of the loop coil are provided so as to cross the predetermined direction of the display elements, it is possible to prevent artifacts from being produced on display even when the above-mentioned display apparatus and the above-mentioned position detecting apparatus are combined. Therefore, it is possible to realize an excellent position inputting apparatus.

Further, according to an embodiment of the present invention, a computer is provided , the computer includes the display apparatus capable of display images by changing the states of a plurality of display elements arrayed in the predetermined direction and the position detecting apparatus disposed on the display apparatus and which can detect the position indicated on the display apparatus. Since the detecting conductor disposed on the position detecting apparatus is the loop coil composed of short sides and long sides and the detecting conductor is characterized in that the long sides of the loop coil are provided so as to cross the predetermined direction of the display elements, it is possible to prevent artifacts from being produced on display even when the above-mentioned display apparatus and the above-mentioned position detecting apparatus are combined. Therefore, it is possible to realize an excellent computer.

The detecting apparatus may be included in a variety of electronic apparatus. For example, the detecting apparatus may be included in a smart phone; a personal digital assistant; a digital camera and a photo graph viewer or other types of electrical appliance.

The detecting conductor may be produced as part of the display apparatus, or alternatively the detector may be separately produced as part of a kit for addition to the display of an existing electronic device. Thus, the detecting conductor may be fixed over the display of an existing device in order to add a position detection functionality to the display of the device.

It should be noted that the present invention is not limited to the above-mentioned embodiments and that the present invention can be variously modified without departing from the scope of the claims.

It should be understood by those skilled in the art that various modifications, combinations, sub-combinations and alterations may occur depending on design requirements and other factors insofar as they are within the scope of the appended claims or the equivalents thereof.

### REFERENCE NUMERALS

FIG. 1:
   5: TRANSMISSION AND RECEPTION SWITCHING CKT
   6: CONTROL CKT
   61: SIGNAL GENERATING CKT
   64: BANDPASS FILTER
   65: DETECTOR
   66: SAMPLE-AND-HOLD CKT
   67: A/D CONVERTER
   POSITION DETECTED OUTPUT
FIG. 6:
   2: DISPLAY APPARATUS
   100: POSITION DETECTING APPARATUS
   104: STORAGE UNIT
   105: INPUT UNIT
   106: DISPLAY UNIT

## Claims

1. A position detecting apparatus comprising:
a display apparatus (2) for displaying images by changing the states of a plurality of display elements, said display elements being arrayed in predetermined horizontal and vertical directions; and
a position detecting grid comprising loop coils,
wherein
said display apparatus has a plurality of said loop coils being disposed along its display side to thereby detect the position indicated on said display apparatus,
said loop coils comprise sides having a first length and a second length, and the sides of the loop coils having said first length
- cross the screen area of said display apparatus and
- are disposed at an equal interval on the screen of said display apparatus,
**characterized in that**:
said first length is greater than said second length,
the sides of the loop coils having said second length are located outside the screen area of said display apparatus,the sides of said loop coils having said first length are set to oblique direction which crosses any of the horizontal and vertical directions at an angle greater than two degrees,
the shape of each loop coil is fixed, and
the detection sensitivity of each loop coil is corrected in proportion to its size within the position detecting grid formed by the loop coils.

2. A position detecting apparatus according to claim 1, wherein said plurality of loop coils is disposed on the screen of said display apparatus in an overlapping fashion.

3. A position detecting apparatus according to claim 1, wherein each coil of said plurality of loop coils is formed of a plurality of turns, said multiple wirings forming the side of said first length of said detecting conductor being disposed on the screen of said display apparatus at an equal interval.

4. A position detecting apparatus according to claim 1, wherein said position indicated on said display apparatus is detected by calculating the levels of signals received by an indicating device after said plurality of loop coils was selected to transmit transmission signals.

5. A position detecting apparatus according to claim 1, wherein said position indicated on said display apparatus is detected by calculating the levels of received signals after said plurality of loop coils received transmission signals transmitted from said indicating device.

6. A position detecting apparatus according to claim 1, wherein said position indicated on said display apparatus is detected by calculating the levels of received signals after said plurality of loop coils was selected to transmit transmission signals and signals received at said indicating device and transmitted from said indicating device were received by the same or different loop coils.

7. A position detecting apparatus according to claim 1, wherein said plurality of loop coils is composed of a first loop coil group and a second loop coil group in which the sides fo said first length of said detecting conductor are crossing each other, the sides of said first length of said first and second loop coil groups crossing the predetermined horizontal and vertical directions of said display elements.

8. A position inputting apparatus comprising:
a position detecting apparatus of any of the preceding claims 1 to 7; and
a position indicating device (3).

9. An electronic apparatus comprising:
a position detecting apparatus of any of claims 1 to 7.

10. The electronic apparatus of claim 9 being a computer or electrical appliance.

## Patentansprüche

1. Positionserfassungsvorrichtung, umfassend:
eine Ausgabevorrichtung (2) zum Ausgeben von Bildern durch Ändern der Zustände mehrerer Ausgabeelemente, wobei die Ausgabeelemente in vorgegebenen horizontalen und vertikalen Richtungen gruppiert sind; und
ein Positionserfassungsraster, das Schleifenspulen umfasst, wobei die Ausgabevorrichtung mehrere von den Schleifenspulen aufweist,
die entlang ihrer Ausgabeseite angeordnet sind, um dadurch die Position zu erfassen, die auf der Ausgabevorrichtung angezeigt wird,
wobei die Schleifenspulen Seiten mit einer ersten Länge und einer zweiten Länge umfassen und die Schleifenspulen mit der ersten Länge
- die Bildschirmfläche der Ausgabevorrichtung kreuzen und
- in einem gleichmäßigen Abstand auf dem Bildschirm der Ausgabevorrichtung angeordnet sind, **dadurch gekennzeichnet, dass**:
die erste Länge größer ist als die zweite Länge,
die Seiten der Schleifenspulen mit der zweiten Länge außerhalb der Bildschirmfläche der Ausgabevorrichtung angeordnet sind, die Seiten der Schleifenspulen mit der ersten Länge in einer schrägen Richtung eingestellt sind, die jede von den horizontalen und
vertikalen Richtungen in einem Winkel von mehr als zwei Grad kreuzt,
die Form jeder Schleifenspule unveränderlich ist, und
die Erfassungsempfindlichkeit jeder Schleifenspule im Verhältnis zu ihrer Größe innerhalb des Positionserfassungsrasters, das von den Schleifenspulen gebildet wird, korrigiert wird.

2. Positionserfassungsvorrichtung nach Anspruch 1, wobei die mehreren Schleifenspulen auf überlappende Weise auf dem Bildschirm der Ausgabevorrichtung angeordnet sind.

3. Positionserfassungsvorrichtung nach Anspruch 1, wobei jede Spule von den mehreren Schleifenspulen aus mehreren Windungen gebildet ist, wobei die mehreren Drähte, die die Seite des Erfassungsleiters mit der ersten Länge bilden, in regelmäßigen Abständen auf dem Bildschirm der Ausgabevorrichtung angeordnet sind.

4. Positionserfassungsvorrichtung nach Anspruch 1, wobei die Position, die auf der Ausgabevorrichtung angezeigt wird, durch Berechnen des Pegels von Signalen berechnet wird, die von einer Anzeigevorrichtung empfangen werden, nachdem die mehreren Schleifenspulen ausgewählt wurden, um Sendesignale zu senden.

5. Positionserfassungsvorrichtung nach Anspruch 1, wobei die Position, die auf der Ausgabevorrichtung angezeigt wird, durch Berechnen der Pegel von empfangenen Signalen erfasst wird, nachdem die mehreren Schleifenspulen Sendesignale empfangen haben, die vorn der Anzeigevorrichtung gesendet werden.

6. Positionserfassungsvorrichtung nach Anspruch 1, wobei die Position, die auf der Ausgabevorrichtung angezeigt wird, durch Berechnen der Pegel von empfangenen Signalen erfasst wird, nachdem die mehreren Schleifenspulen ausgewählt wurden, um Sendesignale zu senden, und Signale, die an der Anzeigevorrichtung empfangen werden und von der Anzeigevorrichung gesendet werden, von denselben oder von anderen Schleifenspulen empfangen worden sind.

7. Positionserfassungsvorrichtung nach Anspruch 1, wobei die mehreren Schleifenspulen aus einer ersten Schleifenspulengruppe und einer zweiten Schleifenspulengruppe bestehen, bei denen die Seiten des Erfassungsleiters mit der ersten Länge einander kreuzen, die Seiten der ersten und zweiten Schleifenspulengruppen mit der ersten Länge die vorgegebenen horizonalen und vertikalen Richtungen der Ausgabeelemente kreuzen.

8. Positionserfassungsvorrichtung, umfassend:
eine Positionserfassungsvorrichtung nach irgendeinem der vorangehenden Ansprüche 1 bis 7; und eine Positionsanzeigevorrichtung (3).

9. Elektronische Vorrichtung, umfassend: eine Positionserfassungsvorrichtung nach einem der Ansprüche 1 bis 7.

10. Elektronische Vorrichtung nach Anspruch 9, die ein Computer oder ein elektrisches Gerät ist.

## Revendications

1. Dispositif de détection de position, comprenant :
un dispositif d'affichage (2) pour l'affichage d'images par modification des états d'une pluralité d'éléments d'affichage, lesdits éléments d'affichage étant disposés dans des directions horizontales et verticales prédéterminées ; et
une grille de détection de position comprenant des bobines en forme de boucles,
dans lequel
ledit dispositif d'affichage possède une pluralité de bobines en forme de boucles disposées le long de son côté affichage pour ainsi détecter la position indiqué sur ledit dispositif d'affichage,
lesdites bobines en forme de boucles comprennent des côtés présentant une première longueur et une deuxième longueur,
et les côtés des bobines en forme de boucles présentant ladite première longueur
- traversent la zone d'écran dudit dispositif d'affichage et
- sont disposés selon un intervalle identique sur l'écran dudit dispositif d'affichage,
**caractérisé en ce que** :
ladite première longueur est supérieure à ladite deuxième longueur,
les côtés des bobines en forme de boucles présentant ladite deuxième longueur se trouvent à l'extérieur de la zone d'écran dudit dispositif d'affichage, les côtés desdites bobines en forme de boucles présentant ladite première longueur sont agencés dans des directions obliques croisant chacune des directions horizontales et verticales selon un angle supérieur à deux degrés,
la forme de chaque bobine en forme de boucle est fixée, et
la sensibilité de détection de chaque bobine en forme de boucle est corrigée proportionnellement à sa taille dans la grille de détection de position formée par les bobines en forme de boucles.

2. Dispositif de détection de position selon la revendication 1, dans lequel ladite pluralité de bobines en forme de boucles est disposée de façon à se chevaucher sur l'écran dudit dispositif d'affichage.

3. Dispositif de détection de position selon la revendication 1, dans lequel chaque bobine parmi la pluralité de bobines en forme de boucles est constituée d'une pluralité de spires, ladite multitude de fils formant le côté de ladite première longueur dudit conducteur de détection disposé sur l'écran dudit dispositif d'affichage selon un intervalle identique.

4. Dispositif de détection de position selon la revendication 1, dans lequel ladite position indiquée sur ledit dispositif d'affichage est détectée en calculant les niveaux de signaux reçus par un dispositif d'indication une fois que ladite pluralité de bobines en forme de boucles a été sélectionnée pour transmettre des signaux de transmission.

5. Dispositif de détection de position selon la revendication 1, dans lequel ladite position indiquée sur ledit dispositif d'affichage est détectée en calculant les niveaux de signaux reçus une fois que ladite pluralité de bobines en forme de boucles a reçu des signaux de transmission transmis depuis ledit dispositif d'indication.

6. Dispositif de détection de position selon la revendication 1, dans lequel ladite position indiquée sur ledit dispositif d'affichage est détectée en calculant les niveaux de signaux reçus une fois que ladite pluralité de bobines en forme de boucles a été sélectionnée pour transmettre des signaux de transmission et que les signaux reçus par ladite dispositif d'indication et transmis depuis ledit dispositif d'indication ont été reçus par les mêmes bobines en forme de boucles ou par des bobines en forme de boucles différentes.

7. Dispositif de détection de position selon la revendication 1, dans lequel ladite pluralité de bobines en forme de boucles est constituée d'un premier groupe de bobines en forme de boucles et d'un deuxième groupe de bobines en forme de boucles, dans lesquels les côtés de ladite première longueur dudit conducteur de détection se croisent entre eux, les côtés de ladite première longueur desdits premier et deuxième groupes de bobines en forme de boucles croisant les directions horizontales et verticales prédéterminées desdits éléments d'affichage.

8. Dispositif d'entrée de position, comprenant :
un dispositif de détection de position selon l'une quelconque des revendications 1 à 7 ; et
un dispositif d'indication de position (3).

9. Dispositif électronique comprenant :
un dispositif de détection de position selon l'une quelconque des revendications 1 à 7.

10. Dispositif électronique selon la revendication 9, étant un ordinateur ou un appareil électrique.
